# EUROPÄISCHE PATENTANMELDUNG

(11) **EP 1 143 597 A1**
(43) Veröffentlichungstag der Anmeldung: **10.10.2001**
(21) Anmeldenummer: 00810300.4
(22) Anmeldetag: 05.04.2000
(51) Int. Cl.: H02K 3/50, H01F 41/10

(54) **Wickelverfahren und Wickelkörper**

(71) Anmelder: ATS Wickel- und Montagetechnik AG, 5436 Würenlos (CH)
(72) Erfinder: Kleinschrodt, Rudolf, 5436 Würenlos (CH); Meier, Konrad, 8105 Watt (CH); Walter, Patrice, 8105 Watt (CH)
(74) Vertreter: patentanwälte breiter + wiedmer ag

(57) **Zusammenfassung**

Bei einem Verfahren zum Wickeln von Draht zu Spulen in am Umfang rotationssymmetrischer Körper (10) von elektrischen Geräten angeordnete Axialnuten (12) wird der Draht nach erfolgter Wicklung in Einlegenuten (20) von an einem Ende des Körpers (10) angeordneten, in axialer Richtung (z) vom Körper (10) abragenden Anschlusselementen (16) aus Kunststoff eingelegt und während dem nachfolgenden Einschieben von Kontaktfahnen aus Metall in axialer Richtung in die Anschlusselemente bis zur elektrischen Kontaktierung des Drahtes am Nutgrund fixiert. Zur Fixierung wird der Draht direkt am Anschlusselement (16) ausserhalb der Einlegenut (20) befestigt. Bei einem zur Durchführung des Verfahrens geeigneten rotationssymmetrischen Körper weisen die Anschlusselemente (16) eine in einem Winkel (α) zur Einlegenut (20) verlaufende, von einer Aussenfläche (23) des Anschlusselementes (16) ausgehende Befestigungsnut (22) auf.

## Beschreibung

Die Erfindung betrifft ein Verfahren zum Wickeln von Draht zu Spulen in am Umfang rotationssymmetrischer Körper von elektrischen Geräten angeordnete Axialnuten, wobei der Draht nach erfolgter Wicklung in Einlegenuten von an einem Ende des Körpers angeordneten, in axialer Richtung vom Körper abragenden Anschlusselementen aus Kunststoff eingelegt und während dem nachfolgenden Einschieben von Kontaktfahnen aus Metall in axialer Richtung in die Anschlusselemente bis zur elektrischen Kontaktierung des Drahtes am Nutgrund fixiert wird. Im Rahmen der Erfindung liegt auch ein zur Durchführung des Verfahrens geeigneter rotationssymmetrischer Körper.

Bei Statoren von sogenannten Aussenläufer-Elektro- oder Elektronikmotoren werden die einzelnen Spulen in am Aussenumfang des Stators angeordnete Axialnuten gewickelt. Die Statoren sind ggf. mit einer Endscheibe bestückt, von der in axialer Richtung Terminaltaschen als Anschlusselemente zum Einsetzen von Terminals als Kontaktfahnen für die spätere elektrische Kontaktierung des Stators abragen. Der Endscheibe kann weiter eine Printplatte aufgesetzt sein, wobei die Terminals diese durchdringen.

Für die Befestigung und Kontaktierung der Spulenenden einer Statorwicklung sind verschiedene Terminalausführungen bekannt, so beispielsweise die Hakenterminals, die mittels einer Verankerung in der Terminaltasche gehalten werden und eine Klemm- und Kontaktierzunge für das Spulenende aufweisen, mit welcher der Draht gegen das Terminal geklemmt und zusätzlich mit diesem verschweisst wird. Das aus der Terminaltasche herausragende Ende des Hakenterminals ist als Stecker ausgebildet. Eine andere Variante ist das sogenannte Crimpterminal, welches in der Terminaltasche verankert wird und mit Klemm- und Kontaktierfahnen für die Befestigung und Kontaktierung der Spulenenden ausgestattet ist.

Bei einer weiteren bekannten Befestigungs- und Kontaktierungsart der Spulenenden sind die Terminaltaschen jeweils mit einer ersten Nut zum Einlegen des Drahtes und mit einer senkrecht dazu liegenden zweiten Nut zum Einsetzen des Terminals ausgestattet. Dieses Terminal ist an dem in die Nut einzusetzenden Ende unter Freilassung eines Spaltes in zwei Schenkelteile aufgeteilt. Beim Einsetzen des Terminals in die zweite Nut wird der am Grund der ersten Nut liegende Draht vom Spalt des Terminals aufgenommen. Durch den über die innenseitig aufgerauhten oder als Schneidkanten wirkenden Schenkelteile ausgeübten Druck wird die Isolation des Drahtes zerstört und ein elektrischer Kontakt hergestellt.

Bei der letztgenannten Ausführungsform eines Terminals ist es sehr wesentlich, dass der in die erste Nut eingelegte Draht des Spulenendes bis zum erfolgten Einsetzen des Terminals am Nutgrund fixiert bleibt. Insbesondere bei Drahtdicken von weniger als etwa 0.25 mm kann das Festklemmen und damit das Fixieren des Drahtes in der Nut aus fertigungstechnischen Gründen nicht mehr gewährleistet werden. Der in die Nut eingelegte Draht muss bis zum erfolgten Einsetzen des Terminals mechanisch fixiert sein. Bei einer bekannten Terminaltasche wird zu diesem Zweck an deren Aussenseite hilfsweise ein von der Tasche seitlich abragender Knopf befestigt. Durch zwei- bis dreimaliges Umwickeln dieses Knopfes wird der Draht am Nutgrund fixiert. Diese Art der Fixierung erfordert die erwähnte Anordnung einer Hilfseinrichtung an der Terminaltasche, was neben einem aufwendigeren Handling auch mit höheren Gestehungskosten verbunden ist.

Der Erfindung liegt deshalb die Aufgabe zugrunde, ein Wickelverfahren der eingangs genannten Art zu schaffen, welches eine Fixierung des Drahtes in den Anschlusselementen auf einfache Weise und ohne zusätzliche Hilfseinrichtungen ermöglicht.

Eine weitere Aufgabe besteht darin, einen zur Durchführung des erfindungsgemässen Verfahrens geeigneten rotationssymmetrischen Körper anzugeben, der sich insbesondere zur Wicklung mit Flyern eignet.

Bezüglich des Verfahrens führt zur erfindungsgemässen Lösung, dass der Draht zur Fixierung direkt am Anschlusselement ausserhalb der Einlegenut befestigt wird.

Im einfachsten Fall wird der Draht nach dem Austritt aus der Einlegenut mittels eines rasch aushärtenden Klebstoffes direkt an einer Seitenfläche des Anschlusselementes unterhalb der Einlegenut befestigt.

Bei einer anderen Ausführungsform des Verfahrens wird der Draht in eine in einem Winkel zur Einlegenut verlaufende, von einer Aussenfläche des Anschlusselementes ausgehende Befestigungsnut eingelegt und in dieser festgehalten. Bevorzugt ist dabei die Befestigungsnut unterhalb der Einlegenut angeordnet und der Winkel zwischen Einlegenut und Befestigungsnut beträgt mehr als 90°, bevorzugt mehr als 120°. Diese Verfahrensvariante eignet sich insbesondere bei Wicklungen, die mittels eines Flyers durchgeführt werden. Nach dem Einlegen des Drahtes in die Einlegenut macht der Flyer eine weitere Drehung um 180°. Während dieser Bewegung wird der aus der Einlegenut austretende Draht von unten in die Befestigungsnut eingeführt. Je nach Drahtdicke und Ausführung der Nut wird der Draht selbsttätig in der Befestigungsnut gehalten.

Der Draht kann nach dem Einlegen in die Befestigungsnut in dieser mittels eines Klebstoffs zusätzlich befestigt werden. Anstelle eines Klebstoffes kann der Draht nach dem Einlegen in die Befestigungsnut auch durch Verformen der Nut, insbesondere durch Verstemmen, befestigt werden. Bei einer weiteren zweckmässigen Variante wird der Draht nach dem Einlegen in die Befestigungsnut durch lokales Erhitzen des Kunststoffes im Bereich der Befestigungsnut, insbesondere durch lokales Aufschmelzen und Verkleben bzw. Verschweissen der Befestigungsnut, befestigt.

Mit der Anordnung einer Befestigungsnut ergibt sich der weitere Vorteil einer Abreisskante für den Draht, was in fertigungstechnischer Hinsicht eine einfache und effiziente Lösung für die Wicklung von Drähten mit einer Dicke von weniger als etwa 0.25 mm darstellt.

Wie eingangs bereits erwähnt, umfasst die vorliegende Erfindung auch einen rotationssymmetrischen Körper eines elektrischen Gerätes, mit am Umfang des Körpers angeordneten Axialnuten zur Aufnahme von zu Spulen gewickeltem Draht, mit an einem Ende des Körpers angeordneten, in axialer Richtung vom Körper abragenden Anschlusselementen aus Kunststoff mit einer Einlegenut für den Draht nach erfolgter Wicklung, und mit in die Anschlusselemente einsetzbaren Kontaktfahnen aus Metall. Hierbei weisen die Anschlusselemente eine in einem Winkel zur Einlegenut verlaufende, von einer Aussenfläche des Anschlusselementes ausgehende Befestigungsnut auf. Diese Befestigungsnut ist bevorzugt unterhalb der Einlegenut angeordnet und der Winkel zwischen Einlegenut und Befestigungsnut beträgt mehr als 90°, bevorzugt mehr als 120°.

Die zur Durchführung des erfindungsgemässen Verfahrens geeigneten rotationssymmetrischen Körper sind insbesondere Statoren von Elektro- oder Elektronikmotoren, insbesondere von Aussenläufermotoren.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 eine teilweise geschnittene Seitenansicht eines Stators;
- Fig. 2 ein vergrössertes Detail von Fig. 1;
- Fig. 3 eine Seitenansicht auf das Detail in Fig. 2 in Blickrichtung a;
- Fig. 4 den gewickelten Stator von Fig. 1;
- Fig. 5 die Draufsicht auf die Endscheibe des gewickelten Stators von Fig. 4;
- Fig. 6 ein vergrössertes Detail von Fig. 4;
- Fig. 7 einen Querschnitt durch eine Terminaltasche mit eingesetztem Terminal.

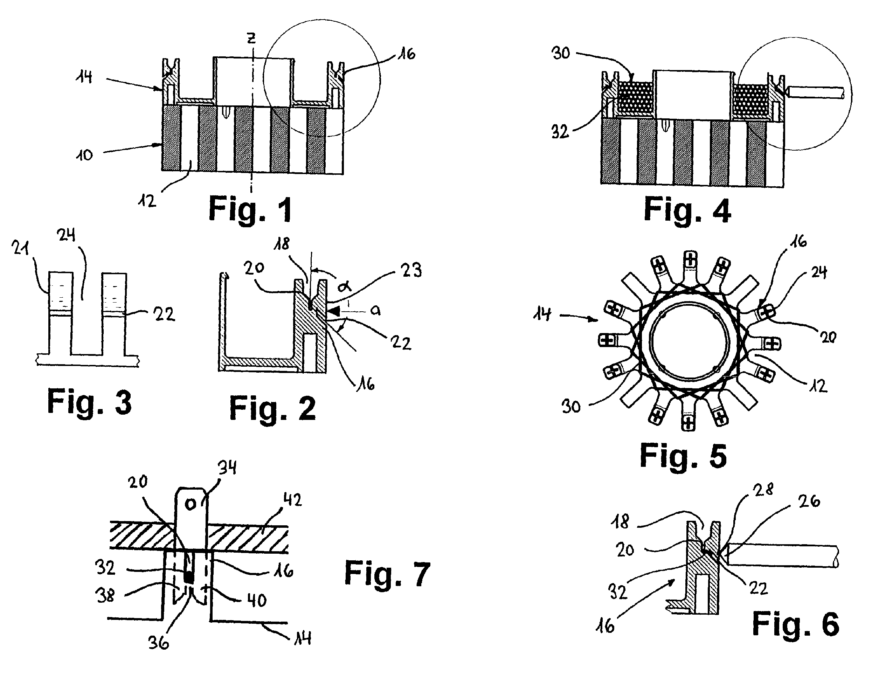

Ein in Fig. 1 gezeigter Stator 10 eines nicht näher dargestellten Aussenläufer-Elektromotors weist an dessen Aussenumfang angeordnete Axialnuten zur Aufnahme von Drahtwicklungen auf. Am Stator 10 ist an einer seiner Stirnseiten eine Endscheibe 14 mit auf einem Kreis angeordneten und in axialer Richtung z vom Stator abragenden Terminaltaschen 16 festgelegt. Wie insbesondere aus den Fig. 2 und 3 hervorgeht, weisen die Terminaltaschen 16 eine zur Achsenrichtung z parallele Einführungsnut 18 auf, die in eine engere Einlegenut 20 übergeht.

An der dem Aussenumfang des Stators 10 entsprechenden Aussenfläche 23 der Terminaltasche 16 ist eine unterhalb der Einlegenut 20 liegende Befestigungsnut 22 angeordnet. Einlegenut 20 und Befestigungsnut 22 schliessen einen Winkel α von beispielsweise 135° ein, d.h. die Befestigungsnut 22 verläuft in einem Winkel von 45° schräg nach oben.

Fig. 3 zeigt, dass senkrecht zur Einführungsnut 18 und zur Einlegenut 20 eine Terminalnut 24 angeordnet ist. Die Terminalnut 24 ist im vorliegenden Beispiel mehr als doppelt so dick wie die Einführungsnut 18 und die Einlegenut 20 zusammen.

Die Fig. 4 bis 6 zeigen einen Stator 10 mit aufgesetzter Endscheibe 14 in gewickelter Form. Am Wickelanfang, am Wickelende sowie ggf. für Zwischenabgriffe wird der Draht 32 während des Wickelvorganges in die Einführungsnut 18 und weiter in die Einlegenut 20 der entsprechenden Terminaltaschen 16 eingelegt. Der Draht 32 wird nach seinem Austritt aus der Einlegenut 20 weiter nach unten geführt, an einer Seitenfläche 21 der Terminaltasche 16 umgelenkt und an der Aussenfläche 23 der Terminaltasche 16 von unten in die Befestigungsnut 22 eingeführt. Diese Art der Drahtführung ergibt sich automatisch, wenn der Stator 10 mittels eines in der Zeichnung nicht dargestellten Flyers gewickelt wird.

Nach erfolgtem Einlegen des Drahtes 32 in die Befestigungsnut 22 wird der Draht mittels eines an einem Schweissklebe- oder Verstemmungspunkt 28 an der Aussenfläche 23 im Bereich der Befestigungsnut 22 angreifenden Schweissklebe- oder Verstemmungskopfes 26 in der Befestigungsnut 22 durch Verstemmen bzw. Schweisskleben befestigt. Der Draht wird nachfolgend an dem als Abreisskante dienenden Nutende abgerissen.

Die Befestigung des Drahtes 32 dient dessen Fixierung am Grund der Einlegenut 20. Grundsätzlich kann die Befestigung des Drahtes 32 nach dem Austritt aus der Einlegenut 20 direkt an der entsprechenden Seitenfläche 21 unterhalb der Einlegenut 20 durch Kleben mittels eines schnell aushärtenden Klebers oder durch einen Schweissklebevorgang direkt an der aus Kunststoff gefertigten Terminaltasche 16 an der genannten Seitenfläche 21 erfolgen. Anstelle eines Schweissklebens oder Verstemmens der Befestigungsnut 22 kann die Befestigung des in die Befestigungsnut eingelegten Drahtes 32 grundsätzlich auch mit einem schnellhärtenden Kleber durchgeführt werden.

Die elektrische Kontaktierung des Drahtes 32 in der Einlegenut 20 erfolgt - wie an einem Beispiel in Fig. 7 gezeigt - über ein in die Terminalnut 24 eingesetztes Terminal 34. Das in die Terminalnut 24 der Terminaltasche 16 eingesetzte Terminal 34 ist an dem in die Terminalnut 24 einzusetzende Ende unter Freilassung eines Spaltes 36 in zwei Schenkelteile 38, 40 aufgeteilt. Beim Einsetzen des Terminals 34 in die Terminalnut 24 wird der am Grund der Einlegenut 20 liegende Draht 32 vom Spalt 36 des Terminals 34 aufgenommen. Durch den über die innenseitig aufgerauhten oder als Schneidkanten wirkenden Schenkelteile 38, 40 ausgeübten Druck wird die Isolation des Drahtes 32 zerstört und ein elektrischer Kontakt hergestellt.

Der Endscheibe 14 kann eine Printplatte 42 aufgesetzt sein, wobei die Terminals 34 diese durchdringen.

## Patentansprüche

1. Verfahren zum Wickeln von Draht (32) zu Spulen (30) in am Umfang rotationssymmetrischer Körper (10) von elektrischen Geräten angeordnete Axialnuten (12), wobei der Draht (32) nach erfolgter Wicklung in Einlegenuten (20) von an einem Ende des Körpers (10) angeordneten, in axialer Richtung (z) vom Körper abragenden Anschlusselementen (16) aus Kunststoff eingelegt und während dem nachfolgenden Einschieben von Kontaktfahnen (34) aus Metall in axialer Richtung (z) in die Anschlusselemente (16) bis zur elektrischen Kontaktierung des Drahtes (32) am Nutgrund fixiert wird,
**dadurch gekennzeichnet, dass**
der Draht (32) zur Fixierung direkt am Anschlusselement (16) ausserhalb der Einlegenut (20) befestigt wird.

2. Verfahren nach Anspruch 1, **dadurch gekennzeichnet, dass** der Draht (32) mittels eines rasch aushärtenden Klebstoffes an einer Seitenfläche (21) des Anschlusselementes unterhalb der Einlegenut (20) befestigt wird.

3. Verfahren nach Anspruch 1, **dadurch gekennzeichnet, dass** der Draht (32) in eine in einem Winkel (α) zur Einlegenut (20) verlaufende, von einer Aussenfläche (23) des Anschlusselementes (16) ausgehende Befestigungsnut (22) eingelegt und in dieser festgehalten wird.

4. Verfahren nach Anspruch 3, **dadurch gekennzeichnet, dass** die Befestigungsnut (22) unterhalb der Einlegenut (20) angeordnet ist und der Winkel (α) zwischen Einlegenut (20) und Befestigungsnut (22) mehr als 90°, bevorzugt mehr als 120°, beträgt.

5. Verfahren nach Anspruch 3 oder 4, **dadurch gekennzeichnet, dass** der Draht (32) nach dem Einlegen in die Befestigungsnut (22) in dieser mittels eines Klebstoffes befestigt wird.

6. Verfahren nach Anspruch 3 oder 4, **dadurch gekennzeichnet, dass** der Draht (32) nach dem Einlegen in die Befestigungsnut (22) durch Verformen der Nut, insbesondere durch Verstemmen, befestigt wird.

7. Verfahren nach Anspruch 3 oder 4, **dadurch gekennzeichnet, dass** der Draht (32) nach dem Einlegen in die Befestigungsnut (22) durch lokales Erhitzen des Kunststoffes im Bereich der Befestigungsnut, insbesondere durch lokales Aufschmelzen und Verkleben bzw. Verschweissen der Befestigungsnut, befestigt wird.

8. Rotationssymmetrischer Körper eines elektrischen Gerätes, mit am Umfang des Körpers (10) angeordneten Axialnuten (12) zur Aufnahme von zu Spulen (30) gewickeltem Draht (32), mit an einem Ende des Körpers (10) angeordneten, in axialer Richtung (z) vom Körper (10) abragenden Anschlusselementen (16) aus Kunststoff mit einer Einlegenut (20) für den Draht (32) nach erfolgter Wicklung, und mit in die Anschlusselemente (16) einsetzbaren Kontaktfahnen (32) aus Metall,
**dadurch gekennzeichnet, dass**
die Anschlusselemente (16) eine in einem Winkel zur Einlegenut (22) verlaufende, von einer Aussenfläche (23) des Anschlusselementes (16) ausgehende Befestigungsnut (22) aufweisen.

9. Rotationssymmetrischer Körper nach Anspruch 8, **dadurch gekennzeichnet, dass** die Befestigungsnut (22) unterhalb der Einlegenut (20) angeordnet ist und der Winkel zwischen Einlegenut (20) und Befestigungsnut (22) mehr als 90°, bevorzugt mehr als 120°, beträgt.

10. Rotationssymmetrischer Körper zur Durchführung des Verfahrens nach einem der Ansprüche 1 bis 7, insbesondere rotationssymmetrischer Körper nach Anspruch 8 oder 9, **dadurch gekennzeichnet, dass** er ein Stator (10) eines Elektro- oder eines Elektronikmotors, insbesondere eines Aussenläufermotors, ist.
